# EUROPEAN PATENT SPECIFICATION

(11) **EP 0 599 637 B1**
(45) Date of publication and mention of the grant of the patent: **23.04.1997**
(21) Application number: 93309377.5
(22) Date of filing: 24.11.1993
(51) Int. Cl.: B60S 1/04

(54) **Airfoil for a windscreen wiper blade**
Windleitfläche für Scheibenwischer
Déflecteur du vent pour essuie-glace

(30) Priority: 25.11.1992 GB 9224679
(43) Date of publication of application: 01.06.1994
(73) Proprietor: TRICO LIMITED, Gwent NP4 0XZ, Wales (GB)
(72) Inventor: Mote, Steven Andrew, Hayes, Middlesex UB4 9QH (GB); Horne, Anthony John, Bognor Regis, W. Sussex (GB)
(74) Representative: James, Michael John Gwynne

(56) References cited:
- EP-A- 0 398 376
- EP-A- 0 565 443
- DE-A- 4 017 078
- US-A- 5 206 969

## Description

This invention relates to airfoils for windscreen wiper blades.

With the advent of the modern car travelling at relatively high speeds and with current forms of curved windscreens, some difficulty has been experienced in ensuring that the windscreen wiper blade rubber stays in contact with the windscreen throughout the major part of its wipe pattern due to the effect of the air flowing across the windscreen. As the speed of the air flow increases, there is a significant tendency to get under the windscreen wiper blade harness and to lift the windscreen wiper out of contact with the windscreen at certain parts of the wipe pattern. The problem can, to some extent, be overcome by increasing the pressure by which the windscreen wiper is pressed against the windscreen i.e. by increasing the spring strength of the spring of the wiper arm. However, while this has been found to be effective in combating the wiper lift at high air flow velocities, the pressure provided at lower air flow velocities is very considerable, and, without the lifting effect of the air flow, this pressure is sufficient to impair the wipe of the windscreen wiper at lower speeds and also requires the provision of considerably more powerful drive motors in order to overcome the excessive friction between the windscreen wiper rubber and the windscreen at these effective pressures.

Many proposals have been made to overcome this problem by arrangements which vary the pressure of the windscreen wiper on the windscreen as a function of the air flow velocity. One such arrangement is the provision of airfoils which are positioned on the upstream side of the windscreen wiper blade and are shaped so as to catch the air flow and cause it to provide a downward force on the windscreen wiper blade which counteracts the upward lift force, either by providing an opposed downwardly acting pressure or by diverting a fair amount of the air flow over the blade instead of under it.

While this type of operation has proved relatively successful, problems have developed in the provision of an economic construction.

In accordance with some proposals, the airfoil vane is built into the yoke structure of the blade harness itself but such an arrangement is undesirable because it requires the development of additional yoke types and, where as usual, the yoke concerned is made of metal, the increased cost of the harness and also the increased weight thereof is not satisfactory.

Methods have been proposed in which the airfoil vane in produced as a separate entity and is attached to the appropriate part of the blade harness by various relatively complicated means, often requiring a special construction of the yoke or yokes of the blade harness in order to provide effective attachment. For example DE-A-4017078 discloses a means of attaching an airfoil vane to a yoke structure by locating the vane within the yoke structure and securing it in place by separate clips which are forced through aligned holes in the vane and yoke structure and then spring into a locking condition.

The present invention seeks to provide an airfoil for windscreen wiper blades which comprises a member which is separate from the yokes of the windscreen wiper blade but which can be readily attached to and, if necessary, detached from the blade.

According to one aspect of the invention, there is provided an airfoil for ready attachment to and detachment from a windscreen wiper blade comprising a vane member intended to lie along side the blade on the side of the blade intended to be upstream of the air flow over the vehicle in use, the vane being provided at its edge away from the windscreen with at least two integral clip members (Air foil of the type disclosed in DE-A-4 017 078), characterised in that each of the clip members has a depending portion extending downwardly to pass through respective apertures in the base of the main yoke of the windscreen wiper blade from a position above said aperture, the clips or parts thereof being flexible and resilient with respect to the vane proper and being movable or having parts movable thereof for engagement under the edges of the apertures so as to retain the airfoil vane in place, each clip having a slot facing outwardly in the longitudinal direction of the windscreen wiper blade, the slot being intended to receive the edge of the aperture in the blade harness, assembly of the vane on the harness being achieved by flexing of the vane itself, the right hand and left hand clips having right and left hand facing slots respectively, and the vane itself being flexible such that the vane can be released to cause the two clips to move away from each other and so to cause edges of the respective apertures to enter into respective slots in the clips.

According to a second aspect of the invention there is provided an airfoil for ready attachment to and detachment from a windscreen wiper blade comprising a vane member intended to lie along side the blade on the side of the blade intended to be upstream of the air flow over the vehicle in use, the vane being provided at its edge away from the windscreen with at least two integral clip members (Air foil of the type disclosed in DE-A-4 017 078), characterised in that each of the clip members has a depending portion extending downwardly to pass through respective apertures in the base of the main yoke of the windscreen wiper blade from a position above said aperture, the clips or parts thereof being flexible and resilient with respect to the vane proper and being movable or having parts movable thereof for engagement under the edges of the apertures so as to retain the airfoil vane in place, each clip being provided with resilient outward facing projections which co-operate with a head portion of the clip and between which the edges of the apertures in the primary yoke of the windscreen wiper blade pass, the arrangement being such that the resilient projections can be pushed together to allow them to be passed through the apertures, the projection then being released so as to move outwards and lie under the edges of the apertures in the main yoke of the windscreen wiper blade.

The apertures in the main yoke to which the airfoil vane is attached may be apertures which have been provided in the main yoke of the windscreen wiper blade in current forms of blade. In this way, the need to provide a special construction of yoke for the blade is avoided and the vane can therefore be also attached to existing windscreen wiper installations.

If desired, the clip portions may be provided additionally with clip members which extend underneath the bottom of the main yoke so as to assist in maintaining the airfoil vane in the appropriate orientation in respect to the windscreen wiper blade harness.

The invention will now be described in greater detail, by way of example, with reference to the drawings in which:
Figure 1 is a front view of windscreen wiper blade to which is shown attached one form of airfoil vane in accordance with the invention, the vane being shown as transparent to show the structure of the blade therebehind;
Figure 2 is plan view of the windscreen wiper blade shown in figure 1;
Figure 3 is a sectional view of the fastening arrangement of the airfoil vane shown in Figure 1 and 2 and taken on the lines of III-III of Figure 2;
Figure 4 is a view of the fastening arrangement of the airfoil vane shown in Figures 1 to 3 taken on the line IV-IV of Figure 3;
Figure 5 is a view similar to Figure 3 but showing a second form of fastening arrangement, and
Figure 6 is a view similar to Figure 4 but showing the fastening arrangement of Figure 5.

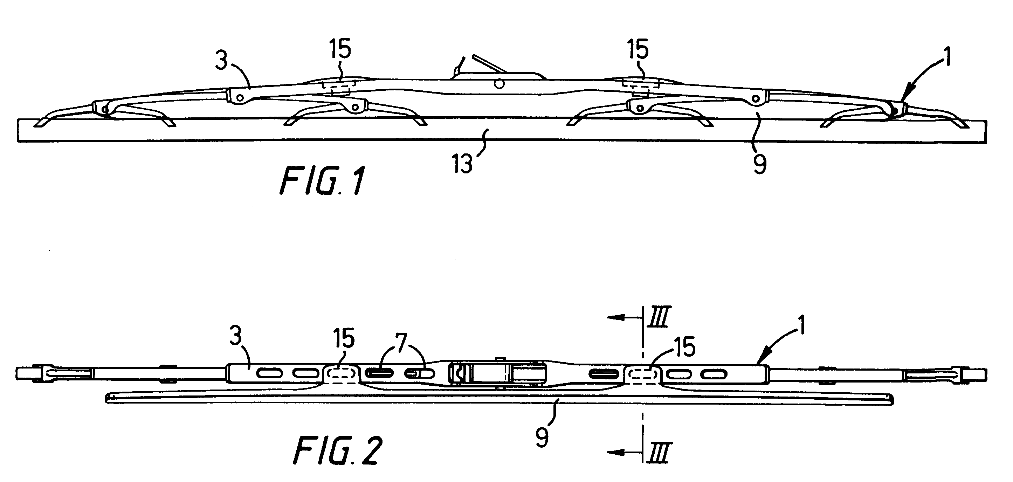

Referring firstly to Figure 1 and 2, there is shown a windscreen wiper blade 1 comprising a harness having a main yoke 3 which is of a standard type. As will be appreciated, the main yoke 3 is of generally channelled section and is provided with a plurality of longitudinally spaced apertures 7 in well known fashion.

Attached to this windscreen wiper blade 1 is an airfoil 9 which extends along one side of the windscreen wiper blade 1 and downwardly from the upper edge of the windscreen wiper blade 1 to the vicinity of the blade rubber 13 as can be seen, the airfoil vane 9 is provided at its upper edge with two clips 15 which are shaped to engage in two of the apertures 7 in the main yoke 3 of the windscreen wiper blade 1.

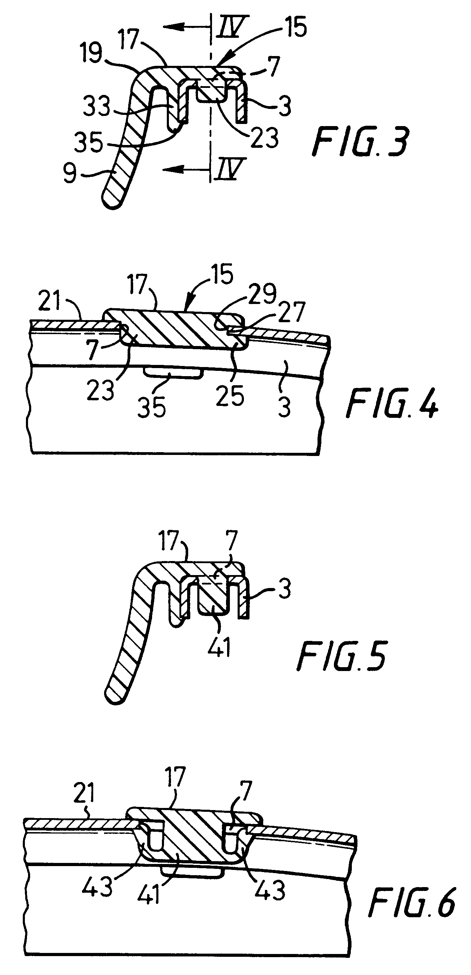

One type of clip 15 is shown in more detail in Figures 3 and 4. To this end, the clip 15 comprises an extension 17 of the upper edge 19 of the vane 9 but extends generally at right angles to the vane 9 itself so as to pass over the upper surface of the channel base 21 of the main yoke 3 in a position above one of the apertures 7 therein. From this part of the vane extension 17, there is provided a downwardly extending part 23 which passes into the aperture 7 in the main yoke 3.

In this embodiment clip, the downwardly depending portion 23 has, at one side, a lip member 25 extending parallel to the extended portion 23 of the vane 9 so as to provide a slot 27 therein which points in the longitudinal direction of the windscreen wiper blade 1.

It will be appreciated that, as seen in the drawings, the right hand clip 15 will have a right facing slot 27 (as shown in Figure 3) while the left hand clip 15 will have a left hand facing slot 27 for a purpose to be described.

In order to achieve attachment of the vane 9 as shown to the main yoke 3 of the windscreen wiper blade 1, one of the two clips 15 has its depending part 23 inserted into the aperture 7 in the main yoke 3 and is moved side ways in a direction such that the outward side 29 of the aperture 7enters the slot 27 provided in the clip 15. The second clip 15 can then be inserted in its aperture 7 towards the other end of the main yoke 3 by the expedient of flexing the vane 9, suitably of a plastics material, so that once the portion 23 is inserted in to the aperture 7, the vane 9 can be released to push the two clips 15 away from each other and so cause the edge 29 of the aperture 7 for the second clip 15 to enter into the slot 27 therein.

Removal of the vane 9 from the windscreen wiper blade 1 can be achieved by means of the reverse procedure.

In addition to the parts so far described, the extended portion 17 of the vane 9 may be provided with a downwardly extending tongue 33 which is of a springy nature and which has an inwardly extending detent 35 at the bottom thereof. The purpose of the depending tongue 33 is to sit down the side of the main yoke 3 in the region of the mouth of the channel thereof as can be best seen in Figure 3.

Figures 5 and 6 show an alternative arrangement of clip 15 which does not, in this case, require flexing of the vane 9 for assembly purposes.

In this embodiment, the vane 9 is provided with the previously described extension portion 17 and also has a downwardly depending portion 41 which enters the aperture 7 in the main yoke 3. However, the width of the downwardly depending portion is significantly less than that in the previous embodiment and has, extending outwardly therefrom, a pair of flexible detent members 43 which are moveable between a first unstable position in which they are narrower than the length of the aperture 7 so that they can pass therethrough and a second and stable position in which they render the longitudinal width of the depending portion 41 longer than the length of the aperture 7 so that the clip 15 can no longer be removed from the aperture 7 and thus retain the vane 9 in place. It will be observed that, to attach the vane 9 of the second embodiment onto the main yoke 3 of the windscreen wiper blade 1, all that is necessary is for the depending parts 41 of the clips 15 to be positioned over the apertures 7 and for the clips 15 to be pressed down into the apertures 7, the tongues and detents 43 moving inwardly under the pressure exerted thereon, but, having passed through the apertures 7, will spring outwards again to take up their locking positions. It will also be observed that there is an L shaped notch 45 in the upper parts of these detents 43 so that the detents 43 take up the position against the edge and under-surface of the apertures 7.

In addition, the downwardly extending tongue 33 of the first embodiment may also present in the second embodiment and operates in a similar way.

It will be appreciated that various modifications may be made to the above described embodiments without departing from the scope of the invention. For example, while the clips of the vanes have been indicated for insertion in currently existing slots in the main yoke of the windscreen wiper blade harness, they could equally well be used to co-operate with other apertures formed in the yoke, and in particular in apertures formed in yokes which otherwise do not have such apertures.

Where desired, and particularly with longer lengths of the vane and windscreen wiper blade, more than two fixing elements may be provided, such as three or four.

Other means may be used for attaching the vane into the apertures in the main yoke as required.

From the above it will be seen that the invention, and its particular embodiments as described above, provides for an attachable and detachable vane structure which can be applied readily and economically to a windscreen wiper blade and in particular to certain types of windscreen wiper blade which are currently on the market.

## Claims

1. An airfoil for ready attachment to and detachment from a windscreen wiper blade (1) comprising a vane member (9) intended to lie along side the blade (1) on the side of the blade (1) intended to be upstream of the air flow over the vehicle in use, the vane (9) being provided at its edge away from the windscreen with at least two integral clip members (15), characterised in that each of the clip members (15) has a depending portion extending downwardly to pass through respective apertures (7) in the base of the main yoke (3) of the windscreen wiper blade (1) from a position above said aperture, the clips (15) or parts (25) thereof being flexible and resilient with respect to the vane proper (9) and being movable or having parts movable thereof for engagement under the edges of the apertures (7) so as to retain the airfoil vane (9) in place, each clip (15) having a slot (27) facing outwardly in the longitudinal direction of the windscreen wiper blade (1), the slot (27) being intended to receive the edge of the aperture (7) in the blade harness, assembly of the vane (9) on the harness being achieved by flexing of vane (9) itself, the right hand and left hand clips (15) having right and left hand facing slots (27) respectively, and the vane (9) itself being flexible such that the vane (9) can be released to cause the two clips (15) to move away from each other and so to cause edges (29) of the respective apertures (7) to enter into respective slots (27) in the clips.

2. An airfoil for ready attachment to and detachment from a windscreen wiper blade (1) comprising a vane member (9) intended to lie along side the blade (1) on the side of the blade (1) intended to be upstream of the air flow over the vehicle in use, the vane (9) being provided at its edge away from the windscreen with at least two integral clip members (15), characterised in that each of the clip members (15) has a depending portion extending downwardly to pass through respective apertures (7) in the base of the main yoke (3) of the windscreen wiper blade (1) from a position above said aperture, the clips (15) or parts (25) thereof being flexible and resilient with respect to the vane proper (9) and being movable or having parts movable thereof for engagement under the edges of the apertures (7) so as to retain the airfoil vane (9) in place, each clip (15) being provided with resilient outward facing projections (43) which co-operate with a head portion (17) of the clip (15) and between which the edges of the apertures (7) in the primary yoke (3) of the windscreen wiper blade (1) pass, the arrangement being such that the resilient projections (43) can be pushed together to allow them to be passed through the apertures (7), the projection (43) then being released so as to move outwards and lie under the edges of the apertures (7) in the main yoke (3) of the windscreen wiper blade (1).

3. An airfoil as claimed in claim 1 or 2, characterised in that the apertures (7) in the main yoke (3) to which the airfoil vane (9) is attached comprise apertures (7) which have been provided in the main yoke (3) of the windscreen wiper blade (1) in current forms of blade (1).

4. An airfoil as claimed in claim 1, 2 or 3, characterised in that the clips (15) are additionally provided with clip members (35) which extend underneath the bottom of the main yoke (3) so as to assist in maintaining the airfoil vane (9) in the appropriate orientation with respect to the windscreen wiper blade harness.

## Patentansprüche

1. Windleitfläche zum einfachen Befestigen an bzw. Lösen von einem Scheibenwischer (1) mit einem Windleitelement (9), welches entlang der Seite des Scheibenwischers (1) anliegt, die dem Windstrom des fahrenden Fahrzeuges zugewandt ist, wobei das Windleitelement (9) an der der Windschutzscheibe abgewandten Kante mit mindestens zwei integralen Klammerelementen (15) versehen ist,
**dadurch gekennzeichnet,**
daß jedes Klammerelement (15) einen nach unten gerichteten Vorsprung besitzt, der durch entsprechende Öffnungen (7) in der Basis des Haupthebels (3) des Scheibenwischers (1) von einer Position oberhalb der Öffnung hindurchgreift, wobei die Klammern (15) oder deren Teile (25) flexibel und federnd sind in bezug auf das Windleitelement (9) und beweglich sind oder bewegliche Teile besitzen, die unter die Kanten der Öffnungen (7) greifen, um das Windleitelement (9) festzuhalten, und wobei jede Klammer (15) einen Schlitz (27) aufweist, der in Längsrichtung des Scheibenwischers (1) nach außen gerichtet ist und die Kante der Öffnung (7) in dem Wischer aufzunehmen vermag, während die Montage des Windleitelementes (9) an dem Wischer durchführbar ist durch eine Auslenkung des Windleitelementes (9) selbst, wobei die rechten und linken Klammern (15) nach rechts bzw. nach links gerichtete Schlitze (27) aufweisen und das Windleitelement (9) selbst derart flexibel ist, daß das Element (9) derart freisetzbar ist, daß die beiden Klammern (15) sich voneinander weg bewegen, um hierdurch die Kanten (29) der entsprechenden Öffnung (7) in die jeweiligen Schlitze (7) in den Klammern eingreifen zu lassen.

2. Windleitfläche zum einfachen Befestigen an bzw. Lösen von einem Scheibenwischer (1) mit einem Windleitelement (9), welches an der Seite des Scheibenwischers (1) anliegt, die stromaufwärts des das fahrende Fahrzeug überströmenden Luftstromes liegt, wobei das Windleitelement (9) an der der Windschutzscheibe abgewandten Kante mit mindestens zwei integralen Klammerelementen (15) versehen ist,
**dadurch gekennzeichnet,**
daß jedes Klammerelement (15) einen Bereich aufweist, der sich nach unten erstreckt und entsprechende Öffnungen (7) in der Basis des Haupthebels (3) des Scheibenwischers (1) von einer Position oberhalb der Öffnung durchgreift und die Klammern (15) oder deren Teile (25) flexibel und federnd in bezug auf das Windleitelement (9) sind und beweglich sind oder bewegliche Teile besitzen, die die Kanten der Öffnungen (7) derart untergreifen, daß das Windleitelement (9) festgehalten wird, wobei jede Klammer (15) mit federnden, nach außen gerichteten Vorsprüngen (43) versehen ist, die mit einem Verlängerungsteil (17) der Klammer (15) zusammenwirken und zwischen welchen die Kanten der Öffnungen (7) des Haupthebels (3) des Scheibenwischers (1) hindurchpassen, während die Anordnung derart ist, daß die federnden Vorsprünge (43) zusammenschiebbar sind, so daß sie durch die Öffnungen (7) hindurchführbar sind, worauf dann, wenn die Vorsprünge (43) freigesetzt sind, diese sich nach außen bewegen und die Kanten der Öffnungen (7) des Haupthebels (3) des Scheibenwischers (1) untergreifen.

3. Windleitfläche nach einem der Ansprüche 1 oder 2, dadurch gekennzeichnet, daß die Öffnungen (7) in dem Haupthebel (3), an welchem das Windleitelement (9) befestigt ist, derart ausgebildet sind, daß die Öffnungen (7) innerhalb des Haupthebels (3) des Scheibenwischers (1) die Form des Wischers (1) besitzen.

4. Windleitfläche nach einem der Ansprüche 1, 2 oder 3, dadurch gekennzeichnet, daß die Klammern (15) zusätzlich mit Hakenelementen (15) versehen sind, die den Unterteil des Haupthebels (3) derart untergreifen, daß sie zur Orientierung des Windleitelementes (9) in bezug auf den Scheibenwischer beitragen.

## Revendications

1. Déflecteur de vent pour une fixation aisée à et un détachement aisé d'avec une lame d'essuie-glace (1), comprenant un élément de lame (9) destiné à s'étendre le long de la lame (1) sur le côté de la lame (1) destiné à être en amont de l'écoulement d'air sur le véhicule lors de l'utilisation, la lame (9) étant dotée, au niveau de sa bordure opposée à l'essuie-glace, d'au moins deux éléments d'attache incorporés (15), caractérisé par le fait que chacun des éléments d'attache (15) a une partie pendante s'étendant vers le bas pour passer à travers des ouvertures respectives (7) dans la base de l'étrier principal (3) de la lame d'essuie-glace (1) à partir d'une position située au dessus de ladite ouverture, les attaches (15) ou des parties (25) de celles-ci étant flexibles et élastiques par rapport à la lame (9) proprement dite et étant déplaçables ou ayant des parties de celles-ci déplaçables en vue d'un engagement sous les bordures des ouvertures (7) de façon à maintenir en place la lame (9) du déflecteur de vent, chaque attache (15) ayant une fente (27) tournée vers l'extérieur dans la direction longitudinale de la lame d'essuie-glace (1), la fente (27) étant destinée à recevoir la bordure de l'ouverture (7) dans le harnais de la lame, l'assemblage de la lame (9) sur le harnais étant obtenu par flexion de la lame (9) elle-même, les attaches (15) de droite et de gauche ayant des fentes (27) tournées vers la droite et vers la gauche respectivement, et la lame (9) elle-même étant flexible de telle sorte que la lame (9) puisse être libérée pour amener les deux attaches (15) à s'écarter l'une de l'autre et à amener ainsi des bordures (29) des ouvertures respectives (7) à pénétrer dans des fentes respectives (27) des attaches.

2. Déflecteur de vent pour une fixation aisée à et un détachement aisé d'avec une lame d'essuie-glace (1), comprenant un élément de lame (9) destiné à s'étendre le long de la lame (1) sur le côté de la lame (1) destiné à être en amont de l'écoulement d'air sur le véhicule lors de l'utilisation, la lame (9) étant dotée, au niveau de sa bordure opposée à l'essuie-glace, d'au moins deux éléments d'attache incorporés (15), caractérisé par le fait que chacun des éléments d'attache (15) a une partie pendante s'étendant vers le bas pour passer à travers des ouvertures respectives (7) dans la base de l'étrier principal (3) de la lame d'essuie-glace (1) à partir d'une position située au-dessus de ladite ouverture, les attaches (15) ou des parties (25) de celles-ci étant flexibles et élastiques par rapport à la lame (9) proprement dite et étant déplaçables ou ayant des parties de celles-ci déplaçables en vue d'un engagement sous les bordures des ouvertures (7) de façon à maintenir en place la lame (9) du déflecteur de vent, chaque attache (15) étant dotée de projections (43) tournées vers l'extérieur, élastiques, qui coopèrent avec une partie de tête (17) de l'attache (15) et entre lesquelles passent les bordures des ouvertures (7) de l'étrier principal (3) de la lame d'essuie-glace (1), la disposition étant telle que les projections élastiques (43) peuvent être poussées l'une vers l'autre pour leur permettre de passer à travers les ouvertures (7), la projection (43) étant ensuite libérée de façon à se déplacer vers l'extérieur et à s'étendre sous les bordures des ouvertures (7) de l'étrier principal (3) de la lame d'essuie-glace (1).

3. Déflecteur de vent selon l'une des revendications 1 ou 2, caractérisé par le fait que les ouvertures (7) de l'étrier principal (3) auquel la lame (9) du déflecteur de vent est fixée comprennent des ouvertures (7) qui ont été pratiquées dans l'étrier principal (3) de la lame d'essuie-glace (1) dans les formes courantes de lame (1).

4. Déflecteur de vent selon l'une des revendications 1, 2 ou 3, caractérisé par le fait que les attaches (15) sont dotées en outre d'élément d'attache (35) qui s'étendent au-dessous de la partie inférieure de l'étrier principal (3), de façon à aider à maintenir la lame (9) du déflecteur de vent dans l'orientation appropriée par rapport au harnais de la lame d'essuie-glace.
